(19)

Europäisches Patentamt
European Patent Office
Office européen des brevets

(11) **EP 4 598 179 A1**

(12) **EUROPEAN PATENT APPLICATION**
published in accordance with Art. 153(4) EPC

(43) Date of publication:
**06.08.2025 Bulletin 2025/32**

(21) Application number: **23864648.3**

(22) Date of filing: **11.09.2023**

(51) International Patent Classification (IPC):
*H04W 72/04* (2023.01)

(52) Cooperative Patent Classification (CPC):
**H04L 5/00; H04W 72/04; H04W 72/044**

(86) International application number:
**PCT/CN2023/117909**

(87) International publication number:
**WO 2024/055916 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022  CN 202211111121**

(71) Applicant: **Apogee Networks, LLC
Dallas, TX 75201 (US)**

(72) Inventors:
• **WU, Lu
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATION**

(57)    Disclosed in the present application are a method and apparatus used in a node for wireless communication. The method comprises: a first node receiving first signaling, wherein the first signaling is used for indicating a first RE set; and sending a first code block set in a target RE set, wherein the target RE set is the first RE set or a proper subset of the first RE set. The first RE set is reserved for the first code block set, and the first code block set includes at least one code block; and the target RE set is related to whether a first condition set is satisfied. When the first condition set is satisfied, the target RE set is the first RE set; and when the first condition set is not satisfied, the size of the target RE set depends on the number of bits included in the first code block set. The first condition set includes one or more conditions.

FIG. 1

EP 4 598 179 A1

## Description

### Technical Field

The present application relates to transmission methods and apparatuses in wireless communication systems, in particular to transmission methods and apparatuses for wireless signals in wireless communication systems supporting cellular networks.

### Background Art

In 5G systems, in order to better serve the needs of virtual reality, cloud gaming and other services, the 3GPP (3rd Generation Partner Project) RAN (Radio Access Network) #90e plenary meeting approved the XR enhanced SI (Study Item) of NR (New Radio) Release 18. Among them, in view of the characteristics of XR business, studying how to provide more effective resource allocation and scheduling mechanisms is one of the key issues.

### Summary of the Invention

Through research, the inventors have found that how to adjust time-frequency resources occupied by transmitting a code block set is a key issue.

In response to the above-mentioned problems, the present application discloses a solution. It needs to be noted that although the above description uses uplink as an example, the present application is also applicable to other scenarios (such as downlink, accompanying link), and achieves technical effects similar to those in the uplink. In addition, the adoption of a unified solution in different scenarios (including but not limited to downlink, uplink and accompanying link) can also help reduce hardware complexity and costs. In case of no conflict, the embodiments and features in the embodiments in any node of the present application may be applied to any other node, and vice versa. In the case of no conflict, the embodiments and the features in the embodiments in the present application can be arbitrarily combined with each other.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to definitions in the specification protocol of IEEE (Institute of Electrical and Electronics Engineers).

The present application discloses a method used in a first node for wireless communication, characterized by comprising:

receiving first signaling, wherein the first signaling is used for indicating a first RE set; and
sending a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the problem to be solved in the present application comprises: how to adjust time-frequency resources occupied by transmitting a code block set.

According to one aspect of the present application, it is characterized in that the first condition set comprises a first condition, the first condition comprises: partial or all bits in a first control information block are multiplexed in a physical channel carrying the first code block set, and the first control information block comprises at least one bit.

According to one aspect of the present application, it is characterized in that the first condition also comprises: the first control information block is triggered by the first signaling.

According to one aspect of the present application, the first condition also comprises: the first node receives second signaling; wherein, the second signaling is used for indicating a second RE set, the second RE set is reserved for the first control information block, and the first RE set and the second RE set overlap in a time domain.

According to one aspect of the present application, it is characterized in that the first condition also comprises: a priority of the first control information block is higher than a priority of the first code block set.

According to one aspect of the present application, it is characterized in that the first condition set comprises a second condition, and the second condition comprises: a transmission scheme of a physical channel carrying the first code block set comprises at least one characteristic in a first characteristic set.

According to one aspect of the present application, it is characterized by comprising:

also sending a second bit block in the target RE set;
wherein the second bit block is used for indicating at least one of a symbol occupied by the target RE set or an RB (Resource Block) occupied by the target RE set.

The present application discloses a method used in a second node for wireless communication, characterized by comprising:

sending first signaling, wherein the first signaling is used for indicating a first RE set; and
receiving a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

According to one aspect of the present application, it is characterized in that the first condition set comprises a first condition, the first condition comprises: partial or all bits in a first control information block are multiplexed in a physical channel carrying the first code block set, and the first control information block comprises at least one bit.

According to one aspect of the present application, it is characterized in that the first condition also comprises: the first control information block is triggered by the first signaling.

According to one aspect of the present application, it is characterized in that, the first condition also comprises: the second node sends second signaling; wherein, the second signaling is used for indicating a second RE set, the second RE set is reserved for the first control information block, and the first RE set and the second RE set overlap in a time domain.

According to one aspect of the present application, it is characterized in that the first condition also comprises: a priority of the first control information block is higher than a priority of the first code block set.

According to one aspect of the present application, it is characterized in that the first condition set comprises a second condition, and the second condition comprises: a transmission scheme of a physical channel carrying the first code block set comprises at least one characteristic in a first characteristic set.

According to one aspect of the present application, it is characterized by comprising:

also receiving a second bit block in the target RE set;
wherein, the second bit block is used for indicating at least one of a symbol occupied by the target RE set or an RB occupied by the target RE set.

The present application discloses a first node device for wireless communication, characterized by comprising:

a first receiver receiving first signaling, wherein the first signaling is used for indicating a first RE set;
a first transmitter sending a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

The present application discloses a second node device for wireless communication, characterized by comprising:

a second transmitter for sending first signaling, wherein the first signaling is used for indicating a first RE set; and
a second receiver receiving a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, compared with the traditional solution, the present application has the following advantages:

- according to different scenarios, time-frequency resources required for transmitting a code block set are flexibly determined; and
- the utilization rate of the resources is improved.

**Brief Description of the Drawings**

Other features, objects and advantages of the present application will become more apparent by reading the detailed description of non-limiting embodiments with reference to the following drawings:

FIG. 1 shows a flowchart of first signaling and a first code block set according to one embodiment of the present application;

FIG. 2 shows a schematic diagram of a network architecture according to one embodiment of the present application;

FIG. 3 shows a schematic diagram of an embodiment of a wireless protocol architecture of a user plane and a control plane according to one embodiment of the present application;

FIG. 4 shows a schematic diagram of a first communication device and a second communication device according to one embodiment of the present application;

FIG. 5 shows a flowchart of transmission according to one embodiment of the present application;

FIG. 6 shows a schematic diagram of a relationship between a given target integer and a given symbol number as well as a given RB number according to one embodiment of the present application;

FIG. 7 shows a schematic diagram of a relationship between a given target integer and a given symbol number as well as a given RB number according to another embodiment of the present application;

FIG. 8 shows a schematic diagram of a first condition according to one embodiment of the present application;

FIG. 9 shows a schematic diagram of a first condition according to another embodiment of the present application;

FIG. 10 shows a schematic diagram of a first condition according to one embodiment of the present application;

FIG. 11 shows a schematic diagram of a first condition according to another embodiment of the present application;

FIG. 12 shows a schematic diagram of a second condition according to one embodiment of the present application;

FIG. 13 shows a structural block diagram of a processing apparatus used in a first node device according to one embodiment of the present application; and

FIG. 14 shows a structural block diagram of a processing apparatus used in a second node device according to one embodiment of the present application.

**Detailed Description of Embodiments**

The technical solution of the present application will be further described in detail below in conjunction with the accompanying drawings. It should be noted that the embodiments and features in the embodiments in the present application can be arbitrarily combined with each other in case of no conflict.

**Embodiment 1**

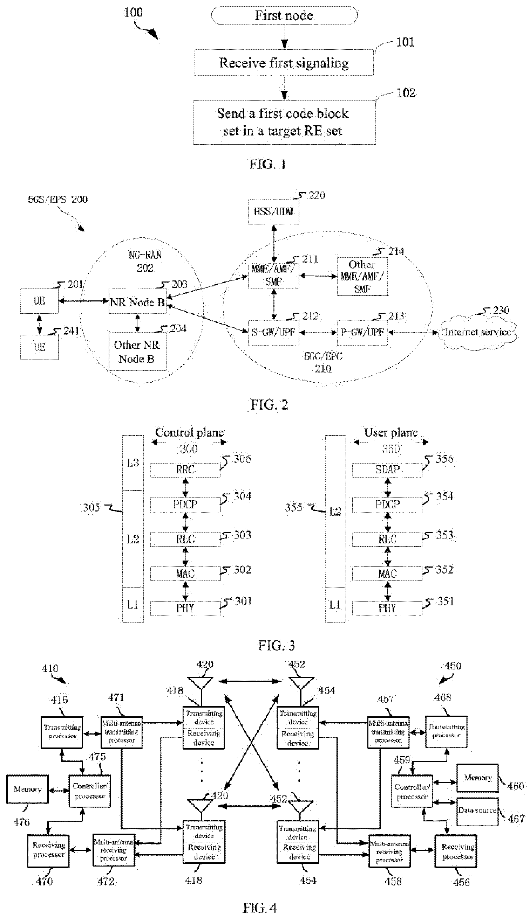

Embodiment 1 illustrates a flowchart of first signaling and a first code block set according to one embodiment of the present application, as shown in FIG. 1. In 100 shown in FIG. 1, each block represents one step.

In Embodiment 1, the first node in the present application receives first signaling in step 101; In step 102, a first code block set is sent in a target RE set; wherein the first signaling is used for indicating a first RE set; the target RE set is the first RE set or a proper subset of the first RE set; the first RE set is reserved for the first code block set, and the first code block set includes at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

Typically, when the first condition set is not satisfied, the number of bits included in the first code block set is used for determining the target RE set from the first RE set.

As one embodiment, when the target RE set is a proper subset of the first RE set, the first node sends the first code block set only in the target RE set in the first RE set.

As one embodiment, the first condition set comprises only one condition.

As one embodiment, the first condition set comprises a plurality of conditions; when there is a condition in the first condition set that is satisfied, the first condition set is satisfied; and when all conditions in the first condition set are not satisfied, the first condition set is not satisfied.

As one embodiment, the first condition set comprises a plurality of conditions; when all conditions in the first condition set are satisfied, the first condition set is satisfied; and when there is a condition in the first condition set that is not satisfied, the first condition set is not satisfied.

As one embodiment, the first condition set comprises a first condition and a second condition; when the first condition or the second condition is satisfied, the first condition set is satisfied; and when neither the first condition nor the second condition is satisfied, the first condition set is not satisfied.

As one embodiment, the first condition set comprises a first condition and a second condition; when both the first condition and the second condition are satisfied, the first condition set is satisfied; and when the first condition or the second condition is not satisfied, the first condition set is not satisfied.

As one embodiment, the first signaling is physical layer signaling.

As one embodiment, the first signaling is DCI (Downlink Control Information) signaling.

As one embodiment, the first signaling is higher-level signaling.

As one embodiment, the first signaling is RRC signaling.

As one embodiment, the first signaling is MAC CE signaling.

As one embodiment, the higher-level signaling is RRC signaling.

As one embodiment, the higher-level signaling is MAC CE signaling.

As one embodiment, the first signaling schedules PUSCH (Physical Uplink Shared CHannel), and the first RE (Resource Element) set comprises all REs scheduled to the PUSCH.

As one embodiment, the first signaling schedules PSSCH (Physical Sidelink Shared CHannel), and the first RE (Resource Element) set comprises all REs scheduled to the PSSCH.

As one embodiment, the first signaling schedules PUSCH, and a physical channel carrying the first code block set is the PUSCH.

As one embodiment, the first signaling schedules a PSSCH, and a physical channel carrying the first code block set is the PSSCH.

As one embodiment, the first signaling is SCI (Sidelink Control Information) signaling, the first signaling schedules a PSSCH, and a physical channel carrying the first code block set is the PSSCH.

As one embodiment, the first signaling schedules a configured grant (CG) PUSCH.

As one embodiment, the first signaling schedules a configured grant PUSCH, and the first RE set comprises all REs of one configured grant PUSCH scheduled by the first signaling.

As one embodiment, the first signaling schedules a configured grant PUSCH, and the first RE set comprises all REs of one configured grant PUSCH transmission occasion scheduled by the first signaling.

As one embodiment, the first signaling is DCI signaling in which CRC (Cyclic Redundancy Check) is scrambled by CS (Configured scheduling)-RNTI (Radio network temporary identifier), and the first signaling schedules a configured grant PUSCH.

As one embodiment, the first signaling is DCI signaling in which CRC (Cyclic Redundancy Check) is scrambled by C (Cell)-RNTI, and the first signaling schedules a configured grant PUSCH.

As one embodiment, the first RE set is composed of all REs occupied by one physical channel that is reserved for the first code block set.

As one embodiment, the meaning of the sentence "The first RE set is reserved for the first code block set" comprises: the first RE set is configured or scheduled to the first code block set.

As one embodiment, the meaning of the sentence "The first RE set is reserved for the first code block set" comprises: the first RE set comprises all REs of a physical channel that is reserved for carrying the first code block set.

As one embodiment, the meaning of the sentence "The first RE set is reserved for the first code block set" comprises: the first RE set is indicated to the first code block set.

As one embodiment, the meaning of the sentence "The first RE set is reserved for the first code block set" comprises: at the moment of sending the first signaling, the first RE set is scheduled for transmission of the first code block set.

As one embodiment, the meaning of the sentence "The first RE set is reserved for the first code block set" comprises: the actual transmission of the first code block set occupies partial or all REs in the first RE set.

As one embodiment, the first code block set comprises all code blocks in a transport block (TB).

As one embodiment, the first code block set comprises all code blocks in at least one transport block (TB).

As one embodiment, the first code block set comprises at least one code block in a transport block (TB).

As one embodiment, the first code block set comprises at least one code block in at least one transport block (TB).

As one embodiment, the meaning of the sentence "The first RE set is reserved for the first code block set" comprises: the first RE set is reserved for a repetition of the first code block set.

As one embodiment, the meaning of the sentence "The first RE set is reserved for the first code block set" comprises: the first RE set is reserved for an actual repetition of the first code block set.

As one embodiment, the meaning of the sentence "The first RE set is reserved for the first code block set" comprises: the first RE set is reserved for a nominal repetition of the first code block set.

As one embodiment, the specific definitions of the actual repetition and the nominal repetition are shown in Chapter 6 of 3GPP TS38.214.

As one embodiment, the meaning of the sentence "The first signaling is used for indicating a first RE set" comprises: the first signaling comprises a first field and a second field, the first field in the first signaling indicates a symbol occupied by the first RE set, and the second field in the first signaling indicates an RB (Resource Block) occupied by the first RE set.

As one embodiment, the meaning of the sentence "The first signaling is used for indicating a first RE set" comprises: the first signaling is used for indicating M RE sets, the first RE set is one of the M RE sets, and M is a positive integer greater than 1.

As one embodiment, the meaning of the sentence "The first signaling is used for indicating a first RE set" comprises: the first signaling comprises a first field and a second field, the first field in the first signaling indicates a symbol occupied by an earliest RE set of M RE sets, and the second field in the first signaling indicates an RB occupied by the earliest RE set of the M RE sets; and the first RE set is one of the M RE sets, and M is a positive integer greater than 1.

As one embodiment, the meaning of the sentence "The first signaling is used for indicating a first RE set" comprises: the first signaling comprises a first field and a second field, the first field in the first signaling indicates a symbol occupied by an earliest RE set of M RE sets, and M, the first RE set is one of the M RE sets, the M is a positive integer greater than 1, and the second field in the first signaling indicates an RB occupied by the earliest RE set of the M RE sets.

As one embodiment, the first signaling is DCI signaling, the first field is a time domain resource assignment field, and the second field is a frequency domain resource assignment field.

As one embodiment, the first signaling is SCI signaling, the first field is a time resource assignment field, and the second field is a frequency resource assignment field.

As one embodiment, the first signaling is RRC signaling, the name of the first field comprises frequencyDomainAllocation, and the name of the second field comprises frequencyDomainAllocation.

As one embodiment, the first signaling is RRC signaling, and the first field and the second field are two fields in RRC IE ConfiguredGrantConfig.

As one embodiment, the specific definitions of the frequencyDomainAllocation field, frequencyDomainAllocation, and RRC IE ConfiguredGrantConfig are shown in Chapter 6.3.2 of 3GPP TS38.331.

As one embodiment, the specific definitions of the time domain resource assignment field and the frequency domain resource assignment field are shown in Chapter 7.3 of 3GPP TS38.212.

As one embodiment, the specific definitions of the time resource assignment field and the frequency resource assignment field are shown in Chapter 8.3 of 3GPP TS38.212.

As one embodiment, one RE occupies one symbol in a time domain and occupies one subcarrier in a frequency domain.

As one embodiment, the symbol is a single-carrier symbol.

As one embodiment, the symbol is a multi-carrier symbol.

As one embodiment, the symbol is an OFDM (Orthogonal Frequency Division Multiplexing) symbol.

As one embodiment, the symbol is an SC-FDMA (Single Carrier - Frequency Division Multiple Access) symbol.

As one embodiment, the symbol is a DFT-s-OFDM (Discrete Fourier Transform-Spread-Orthogonal Frequency Division Multiplexing) symbol.

As one embodiment, the symbol is an FBMC (Filter Bank Multi Carrier) symbol.

As one embodiment, the symbol comprises a CP (Cyclic Prefix).

As one embodiment, the symbol is an OFDM symbol whose transform precoding (or transform precoder) is disabled.

As one embodiment, the symbol is an OFDM symbol whose transform precoding (or transform precoder) is enabled.

Typically, the target RE set is occupied by a physical channel carrying the first code block set.

As one embodiment, the target RE set comprises partial or all REs in the first RE set.

Typically, a proper subset of the first RE set is composed of partial REs in the first RE set.

Typically, the first RE set comprises the target RE set, the first RE set comprises all REs of a physical channel that is reserved for carrying the first code block set, and the target RE set comprises all REs occupied by a physical channel actually carrying the first code block set.

## Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is called an EPS (Evolved Packet System) 200. The 5G NR or LTE network architecture 200 may be referred to as a 5GS (5G System)/EPS (Evolved Packet System) 200 or some other suitable terms. The 5GS/EPS 200 may comprise one or more UE (User Equipment) 201, a piece of UE241 that performs sidelink communication with the UE201, an NG-RAN (Next Generation Radio Access Network) 202, 5GC (5G CoreNetwork)/EPC (Evolved Packet Core) 210, HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides packet switching services, however those skilled in the art will readily understand that various concepts presented throughout the present application can be extended to networks providing circuit switching services. The NG-RAN 202 comprises NR (New Radio) Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiver station, a radio base station, a radio transceiver, a transceiver function, a basic service set (BSS), an extended service set (ESS), a TRP (transmit receive point), or some other suitable terms. The gNB203 provides the UE201 with access points to 5GC/EPC210. Examples of the UE201 comprise cellular telephones, smart phones, session initiation protocol (SIP) telephones, laptops, personal digital assistants (PDAs), satellite radios, global positioning systems, multimedia devices, video devices, digital audio players (e.g., MP3 players), cameras, game consoles, drones, aircrafts, narrowband physical network devices, machine type communication devices, land vehicles, cars, wearable devices, or any other similar functional devices. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 through an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Data Network Gateway)/UPF213. The MME/AMF/SMF211 is a control node that processes signaling between the UE201 and the 5GC/EPC210. Generally speaking, MME/AMF/SMF211 provides carrying and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise operator's corresponding Internet protocol services, which may specifically comprise Internet, intranets, IMS (IP Multimedia Subsystem) and packet switching services.

As one embodiment, the first node in the present application comprises the UE201.

As one embodiment, the second node in the present application comprises the gNB203.

## Embodiment 3

Embodiment 3 illustrates a schematic diagram of an embodiment of a wireless protocol architecture of a user plane and a control plane according to one embodiment of the present application, as shown in FIG. 3.

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 between a first communication node device (UE, gNB or RSU in V2X) and a second communication node device (gNB, UE or RSU in V2X) or between two pieces of UE: layer 1, layer 2 and layer 3. Layer 1 (L1 layer) is the lowest layer and implements various PHY (physical layer) signal processing functions. The L1 layer will be referred to herein as PHY301. Layer 2 (L2 layer) 305 is above PHY301 and is responsible for a link between the first communication node device and the second communication node device, or between two pieces of UE. The L2 layer 305 comprises a MAC (Medium Access Control) sub-layer 302, an RLC (Radio Link Control) sub-layer 303, and a PDCP (Packet Data Convergence Protocol) sub-layer 304, which terminate at the second communication node device. The PDCP sublayer 304 provides multiplexing between different radio bearers and logical channels. The PDCP sub-layer 304 also provides security by encrypting data packets, and provides cross-zone mobility support for the first communication node device between the second communication node devices. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transport channels. The MAC sub-layer 302 is also responsible for assigning various radio resources (for example, resource blocks) in a cell among the first communication node devices. The MAC sublayer 302 is also responsible for HARQ operations. An RRC (Radio Resource Control) sub-layer 306 in layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 includes Layer 1 (L1 layer) and Layer 2 (L2 layer). Regarding the radio protocol architecture used between the first communication node device and the second communication node device in the user plane 350, the physical layer 351, a PDCP sublayer 354 in the L2 layer 355, an RLC sublayer 353 in the L2 layer 355 and a MAC sublayer 352 in the L2 layer 355 are generally the same as the corresponding layers and sublayers in the control plane 300, but the PDCP sublayer 354 also provides header compression for upper layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between QoS streams and data radio bearers (DRBs) to support service diversity. Although not shown, the first communication node device may have several upper layers above the L2 layer 355, including a network layer (for example, IP layer) terminated at P-GW on the network side and an application layer terminated at the other end of the connection (for example, a remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling is generated in the PHY301, or the PHY351.

As one embodiment, the first signaling is generated in the RRC sublayer 306.

As one embodiment, the first signaling is generated in at least one of the PHY301, the PHY351, or the RRC sublayer 306.

As one embodiment, the second signaling is generated in the PHY301, or the PHY351.

As one embodiment, the second signaling is generated in the RRC sublayer 306.

As one embodiment, the second signaling is generated in at least one of the PHY301, the PHY351, or the RRC sublayer 306.

As one embodiment, a physical channel that is sent in the target RE set and carries the first code block set is generated in the PHY301, or the PHY351.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements the functionality of the L2 layer. In DL, the controller/processor 475 provides header compression, encryption, packet segmentation and reordering, multiplexing between logic and transmission channels, and radio resource allocation for the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 450, and constellation mapping based on various modulation schemes (e.g., binary phase shift keying (BPSK), quadrature phase shift keying (QPSK), M phase shift keying (M-PSK), M quadrature amplitude modulation (M-QAM)). The multi-antenna transmitting processor 471 performs digital spatial precoding on encoded and modulated symbols, comprising codebook-based precoding and non-codebook-based precoding, and beamforming processing to generate one or more parallel streams. The transmitting processor 416 then maps each parallel stream to a subcarrier, multiplexes the modulated symbols with a reference signal (e.g., pilot) in a time domain and/or a frequency domain, and then uses a Fast Fourier Inverse Transform (IFFT) to generate a physical channel for carrying a time domain multi-carrier symbol stream. The multi-antenna transmitting processor 471 then performs transmit analog precoding/beamforming operations on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the first communication device 410 to the second communication device 450, at the second communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving analog precoding/beamforming operations. In a frequency domain, a physical layer data signal and a reference signal are demultiplexed by the receiving processor 456, wherein the reference signal will be used for channel estimation, and the data signal recovers any parallel stream destined for the second communication device 450 after being detected by multiple antennas in the multi-antenna receiving processor 458. Symbols on each parallel stream are demodulated and recovered in the receiving processor 456 and generate a soft decision. Later, the receiving processor 456 decodes and de-interleaves the soft decision to recover upper layer data and control signals transmitted by the first communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer-readable medium. In DL, the controller/processor 459 provides demultiplexing between transmission and logical channels, packet reassembly, decryption, header decompression, and control signal processing to recover upper-layer data packets from the core network. The upper layer data packets are then provided to all protocol layers above the L2 layer. Various control signals may also be provided to L3 for L3 processing. The controller/processor 459 is also responsible for error detection using acknowledge (ACK) and/or negative acknowledge (NACK) protocols to support HARQ operation.

In transmission from the second communication device 450 to the first communication device 410, at the second communication device 450, the data source 467 is used for providing upper-layer data packets to the controller/processor 459. The data source 467 represents all protocol layers above the L2 layer. Similar to the sending function at the first communication device 410 described in the DL, the controller/processor 459 implements header compression, encryption, packet segmentation and reordering, and multiplexing between logic and transmission channels based on wireless resource allocation of the first communication device 410, to implement L2 layer functions for a user plane and a control plane. The controller/processor 459 is also responsible for HARQ operations, retransmission of lost packets, and signaling to the first communication device 410. The transmitting processor 468 performs modulation mapping and channel encoding processing, the multi-antenna transmitting processor 457 performs digital multi-antenna spatial precoding, comprising codebook-based precoding and non-codebook-based precoding, and beamforming processing, and later the transmitting processor 468 modulates a generated parallel stream into a multi-carrier/single-carrier symbol stream, and then provides it to different antennas 452 via the transmitting device 454 after analog precoding/beamforming operation in the multi-antenna transmitting processor 457. Each transmitter 454 first converts baseband symbol streams provided from the multi-antenna transmitting processor 457 into radio frequency symbol streams, and then supplies the radio frequency symbol streams to the antenna 452.

In transmission from the second communication device 450 to the first communication device 410, the function at the first communication device 410 is similar to a reception function at the second communication device 450 described in transmission from the first communication device 410 to the second communication device 450. Each receiver 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer-readable medium. The controller/processor 475 provides demultiplexing between transmission and logical channels, packet reassembly, decryption, header decompression, and control signal processing to recover upper-layer data packets from the second communication device 450. The upper layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, and the at least one memory comprises computer program codes. The at least one memory and the computer program codes are configured to be used together with the at least one processor. The second communication device 450 at least: receives first signaling, wherein the first signaling is used for indicating a first RE set; and sends a first code block set in a target RE set, wherein the target RE set is the first RE set or a proper subset of the first RE set; wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the second communication device 450 comprises a memory storing a computer-readable instruction program, the computer-readable instruction program generates an action when executed by at least one processor, and the action comprises: receiving first signaling, wherein the first signaling is used for indicating a first RE set; and sending a first code block set in a target RE set, wherein the target RE set is the first RE set or a proper subset of the first RE set; wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the first communication device 410 comprises: at least one processor and at least one memory, and the at least one memory comprises computer program codes; The at least one memory and the computer program codes are configured to be used together with the at least one processor. The first communication device 410 apparatus at least: sends first signaling, wherein the first signaling is used for indicating a first RE set; and receives a first code block set in a target RE set, wherein the target RE set is the first RE set or a proper subset of the first RE set; wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the first communication device 410 comprises a memory storing a computer-readable instruction program, the computer-readable instruction program generates an action when executed by at least one processor, and the action comprises: sending first signaling, wherein the first signaling is used for indicating a first RE set; and receiving a first code block set in a target RE set, wherein the target RE set is the first RE set or a proper subset of the first RE set; wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, the data source 467} is used for receiving the first signaling in the present application; at least one of {the antenna 420, the transmitting device 418, the transmitting processor 416, the multi-antenna transmitting processor 471, the controller/processor 475, the memory 476} is used for sending the first signaling in the present application.

As one embodiment, at least one of {the antenna 452, the receiving device 454, the receiving processor 456, the multi-antenna receiving processor 458, the controller/processor 459, the memory 460, the data source 467} is used for receiving the second signaling in the present application; at least one of {the antenna 420, the transmitting device 418, the transmitting processor 416, the multi-antenna transmitting processor 471, the controller/processor 475, the memory 476} is used for sending the second signaling in the present application.

As one embodiment, at least one of {the antenna 452, the transmitting device 454, the transmitting processor 468, the multi-antenna transmitting processor 457, the controller/processor 459, the memory 460} is used for sending the first code block set in the target RE set in the present application; at least one of {the antenna 420, the receiving device 418, the receiving processor 470, the multi-antenna receiving processor 472, the controller/processor 475, the memory 476} is used for receiving the first code block set in the target RE set in the present application.

As one embodiment, at least one of {the antenna 452, the transmitting device 454, the transmitting processor 468, the multi-antenna transmitting processor 457, the controller/processor 459, the memory 460} is used for sending the second bit block in the target RE set in the present application; at least one of {the antenna 420, the receiving device 418, the receiving processor 470, the multi-antenna receiving processor 472, the controller/processor 475, the memory 476} is used for receiving the second bit block in the target RE set in the present application.

## Embodiment 5

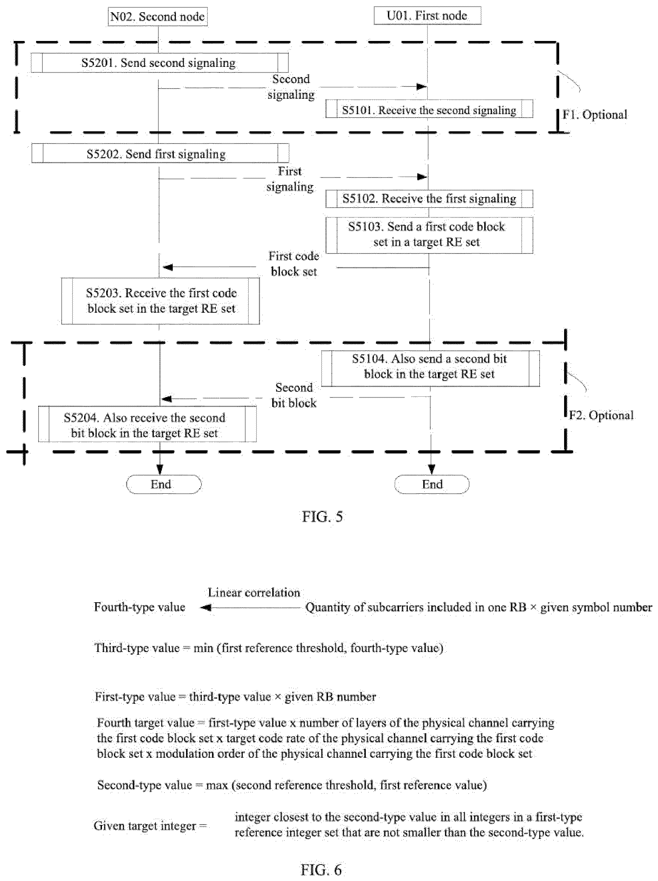

Embodiment 5 illustrates a flowchart of wireless transmission according to one embodiment of the present application, as shown in FIG. 5. In FIG. 5, a first node U01 and a second node N02 are two communication nodes transmitted through an air interface, respectively; In FIG. 5, the steps in blocks F1 and F2 are optional.

For **the first node U01,** second signaling is received in step S5101; first signaling is received in step S5102; in step S5103, a first code block set is sent in a target RE set; In step S5104, a second bit block is also sent in the target RE set;

for **the second node N02,** second signaling is sent in step S5201; first signaling is sent in step S5202; in step S5203, a first code block set is received in a target RE set; and in step S5204, a second bit block is also received in the target RE set.

In Embodiment 5, the first signaling is used for indicating a first RE set; the target RE set is the first RE set or a proper subset of the first RE set; the first RE set is reserved for the first code block set, and the first code block set includes at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the second bit block is used for indicating at least one of a symbol occupied by the target RE set or an RB occupied by the target RE set.

As one embodiment, the second signaling is used for indicating a second RE set, the second RE set is reserved for the first control information block, and the first RE set and the second RE set overlap in a time domain.

As one embodiment, the method used in the second node further comprises:

monitoring a wireless signal in the first RE set.

As one embodiment, the second node device further comprises:

a second receiver that monitors a wireless signal in the first RE set.

As one embodiment, when the first condition set is not satisfied, the size of the target RE set depends on the number of bits included in the first code block set; when the number of the bits included in the first code block set is greater than the second target integer, the target RE set is the first RE set; when the number of the bits included in the first code block set is smaller than the second bit size, the target RE set is a proper subset of the first RE set; and the second target integer is a positive integer and the second bit size is a positive integer.

As one sub-embodiment of the above-mentioned embodiments, the second bit size is equal to the second target integer.

As one sub-embodiment of the above-mentioned embodiments, the second bit size is smaller than the second target integer.

As one sub-embodiment of the above-mentioned embodiments, when the number of the bits included in the first code block set is equal to the second target integer, the target RE set is the first RE set.

As one sub-embodiment of the above-mentioned embodiments, when the number of the bits included in the first code block set is equal to the second target integer, the target RE set is a proper subset of the first RE set.

As one embodiment, when the first condition set is not satisfied and the number of bits included in the first code block set belongs to the first integer set, the target RE set is the first RE set; when the first condition set is not satisfied and the number of bits included in the first code block set belongs to the second integer set, the target RE set is a proper subset of the first RE set; and the first integer set comprises at least one positive integer, the second integer set comprises at least one positive integer, and any positive integer in the second integer set is smaller than any positive integer in the first integer set.

As one sub-embodiment of the above-mentioned embodiments, a second symbol number is the quantity of symbols included in the first RE set in a time domain, a second RB number is the quantity of RBs included in the first RE set in a frequency domain, and the second symbol number and the second RB number are used for determining a second target integer; and the first integer set comprises the second target integer.

As one sub-embodiment of the above-mentioned embodiments, a second symbol number is the quantity of symbols included in the first RE set in a time domain, a second RB number is the quantity of RBs included in the first RE set in a frequency domain, and the second symbol number and the second RB number are used for determining a second target integer; and any integer in the first integer set is not smaller than the second target integer.

As one embodiment, a second symbol number is the quantity of symbols included in the first RE set in a time domain, the second RB number is the quantity of RBs included in the first RE set in a frequency domain, and the second symbol number and the second RB number are used for determining a second target integer; and when the second target integer is smaller than the quantity of bits included in the first code block set, the target RE set is the first RE set.

As one sub-embodiment of the above-mentioned embodiments, when the second target integer is equal to the quantity of bits included in the first code block set, the target RE set is the first RE set.

As one embodiment, when the first condition set is not satisfied, the size of the target RE set depends at least on the number of bits included in the first code block set.

As one embodiment, when the first condition set is not satisfied, the size of the target RE set also depends on a parameter other than the number of bits included in the first code block set.

As one embodiment, when the first condition set is not satisfied, the number of bits included in the first code block set is used for determining whether the target RE set is the first RE set or a proper subset of the first RE set.

As one embodiment, when the first condition set is not satisfied, the number of bits included in the first code block set is used for determining whether the size of the target RE set is equal to the size of the first RE set.

As one embodiment, the size of one RE set is the number of REs included in the one RE set.

As one embodiment, the size of one RE set is the number of symbols included in the one RE set in a time domain.

As one embodiment, the size of one RE set is the number of RBs included in the one RE set in a frequency domain.

As one embodiment, when the first condition set is not satisfied, the number of bits included in the first code block set is used for determining a first target integer, the number of REs included in the target RE set is equal to the first target integer, and the first target integer is equal to a product of a first symbol number, a first RB number, and the number of subcarriers included in one RB.

As one embodiment, when the first condition set is not satisfied, the number of bits included in the first code block set is used for determining a first target integer, the number of REs included in the target RE set is not smaller than the first target integer, and the first target integer is equal to a product of a first symbol number, a first RB number, and the number of subcarriers included in one RB.

As one embodiment, when the first condition set is not satisfied, the number of bits included in the first code block set is used for determining a first target integer, the number of REs included in the target RE set is equal to or greater than the first target integer, and the first target integer is equal to a product of a first symbol number, a first RB number, and the number of subcarriers included in one RB.

As one embodiment, when the first condition set is not satisfied, the target RE set comprises the least RE required in the first RE set for transmitting the first code block set.

As one embodiment, the first symbol number is equal to the quantity of symbols included in the first RE set in a time domain.

As one embodiment, the first symbol number is smaller than or equal to the quantity of symbols included in the first RE set in a time domain.

As one embodiment, the first RB number is equal to the quantity of RBs included in the first RE set in a frequency domain.

As one embodiment, the first RB number is smaller than or equal to the quantity of RBs included in the first RE set in a frequency domain.

As one embodiment, when the first condition set is not satisfied, the quantity of symbols included in the target RE set in a time domain is equal to the first symbol number.

As one embodiment, when the first condition set is not satisfied, the quantity of symbols included in the target RE set in a time domain is greater than or equal to the first symbol number.

As one embodiment, when the first condition set is not satisfied, the quantity of RBs included in the target RE set in a frequency domain is equal to the first RB number.

As one embodiment, when the first condition set is not satisfied, the quantity of RBs included in the target RE set in a frequency domain is greater than or equal to the first RB number.

As one embodiment, when the target RE set is a proper subset of the first RE set, the target RE set and the first RE set occupy identical symbols in a time domain, and the target RE set occupies partial RBs in all RBs occupied by the first RE set in a frequency domain.

As one embodiment, when the target RE set is a proper subset of the first RE set, the first RE set and the target RE set occupy an identical RB in a frequency domain, and the target RE set occupies, in a time domain, partial symbols in all symbols occupied by the first RE set in a time domain.

As one embodiment, when the target RE set is a proper subset of the first RE set, the target RE set occupies, in a frequency domain, partial RBs of all RBs occupied by the first RE set in a frequency domain, and the target RE set occupies, in a time domain, partial RBs in all symbols occupied by the first RE set in a time domain.

Typically, the number of subcarriers included in one RB is equal to 12.

Typically, the number of subcarriers included in one RB is a positive integer greater than 1.

As one embodiment, when the first condition set is not satisfied, a target value is a product of a first-type value, the number of layers of the physical channel carrying the first code block set, a target code rate of the physical channel carrying the first code block set, and a modulation order of the physical channel carrying the first code block set; the target value is not smaller than the quantity of bits included in the first code block set; the first-type value is a product of a third-type value and a first RB number; the third-type value is the smaller of a fourth-type value and a first reference threshold; the fourth-type value is linearly related to the first symbol number, and a linear coefficient between the fourth-type value and the first symbol number is equal to the quantity of subcarriers included in one PRB.

Typically, the first signaling indicates the number of layers, the target code rate, and the modulation order of the physical channel carrying the first code block set.

As one embodiment, a physical channel carrying the first code block set occupies the target RE set; when the first condition set is not satisfied, a target value is a product of a first-type value, the number of layers of the physical channel carrying the first code block set, a target code rate of the physical channel carrying the first code block set, and a modulation order of the physical channel carrying the first code block set; the target value is not smaller than the quantity of bits included in the first code block set; the first-type value is a product of a fourth-type value and a first RB number; and the fourth-type value is linearly related to the first symbol number, and a linear coefficient between the fourth-type value and the first symbol number is equal to the quantity of subcarriers included in one PRB.

As one embodiment, a physical channel carrying the first code block set occupies the target RE set; when the first condition set is not satisfied, a target value is a product of a first-type value, the number of layers of the physical channel carrying the first code block set, a target code rate of the physical channel carrying the first code block set, and a modulation order of the physical channel carrying the first code block set; the target value is not smaller than the quantity of bits included in the first code block set; the first-type value is a product of a fourth-type value and a first RB number; and the fourth-type value is equal to the first symbol number multiplied by the quantity of subcarriers included in one PRB.

As one embodiment, the first transmitter also sends the second bit block in the target RE set only when the target RE subset is a proper subset of the first RE set.

As one embodiment, the first transmitter also sends the second bit block in the target RE set only when the first condition set is not satisfied.

As one embodiment, the second bit block comprises a configured grant UCI in a PUSCH carrying the first code block set.

As one embodiment, the second bit block belongs to a configured grant UCI in a PUSCH carrying the first code block set.

As one embodiment, the second bit block comprises partial bits in a configured grant UCI in a PUSCH carrying the first code block set.

As one embodiment, the second bit block also comprises at least one of an HARQ process number, a redundancy version, and a new data indicator.

As one embodiment, the configured grant UCI in a PUSCH carrying the first code block set comprises at least one of an HARQ process number, a redundancy version, and a new data indicator.

As one embodiment, the second bit block comprises SCI in a PSSCH carrying the first code block set.

As one embodiment, the second bit block belongs to SCI in a PSSCH carrying the first code block set.

As one embodiment, the second bit block comprises partial bits in SCI in a PSSCH carrying the first code block set.

As one embodiment, SCI in a PSSCH carrying the first code block set comprises at least one of an HARQ process number, a redundancy version, and a new data indicator.

As one embodiment, the second bit block is used for indicating a symbol occupied by the target RE set.

As one embodiment, the second bit block is used for indicating an RB occupied by the target RE set.

As one embodiment, the second bit block is used for indicating a symbol occupied by the target RE set and an RB occupied by the target RE set.

As one embodiment, the second bit block indicates a proportion of the target RE set in the first RE set.

As one embodiment, the second bit block indicates the quantity of symbols occupied by the target RE set.

As one embodiment, the second bit block indicates the quantity of RBs occupied by the target RE set.

As one embodiment, the second bit block indicates at least one of the quantity of symbols occupied by the target RE set or the quantity of RBs occupied by the target RE set.

As one embodiment, the second bit block indicates the quantity of symbols occupied by the target RE set and the quantity of RBs occupied by the target RE set.

## Embodiment 6

Embodiment 6 illustrates a schematic diagram of relationships between a given target integer and a given symbol number as well as a given RB number according to one embodiment of the present application, as shown in FIG. 6.

In Embodiment 6, a first-type value is a product of a third-type value and a given RB number; the third-type value is the smaller of a fourth-type value and a first reference threshold; the fourth-type value is linearly related to a given symbol number, and a linear coefficient between the fourth-type value and the given symbol number is equal to the quantity of subcarriers included in one RB; the fourth target value is a product of a first-type value, the number of layers of the physical channel carrying the first code block set, a target code rate of the physical channel carrying the first code block set, and a modulation order of the physical channel carrying the first code block set; a second-type value is the greater one of a second reference threshold and a first reference value, the fourth target value is used for determining a third parameter, a second reference value is equal to the fourth target value divided by the third parameter, the first reference value is equal to the third parameter multiplied by a greatest integer not greater than the second reference value, and the third parameter is a positive integer; the given target integer is equal to an integer closest to the second-type value in all integers in a first-type reference integer set that are not smaller than the second-type value; and the first-type reference integer set comprises a plurality of positive integers.

As one embodiment, the given symbol number is the second symbol number in the present application, the given RB number is the second RB number in the present application, and the given target integer is the second target integer in the present application.

As one embodiment, the given symbol number is the first symbol number in the present application, the given RB number is the first RB number in the present application, and the given target integer is equal to or greater than the quantity of bits included in the first code block set.

As one embodiment, one integer closest to the second-type value in all integers in the first-type reference integer set that are not smaller than the second-type value is equal to the quantity of bits included in the first code block set.

As one embodiment, one integer closest to the second-type value in all integers in the first-type reference integer set that are not smaller than the second-type value is greater than the quantity of bits included in the first code block set.

As one embodiment, the fourth-type value is also linearly related to a first load parameter, a linear coefficient between the fourth-type value and the first load parameter is equal to -1, and the first load parameter is a non-negative integer.

As one embodiment, the first load parameter is configured by a higher-level parameter.

As one embodiment, the first load parameter is configured by an RRC parameter xOverhead.

As one embodiment, the first load parameter is

As one embodiment, the first load parameter is $N_{oh}^{PRB}$ .

As one embodiment, the specific definition of the $N_{oh}^{PRB}$ is shown in Chapter 5.1.3.2 or Chapter 6.1.4.2 of 3GPP TS38.214.

As one embodiment, the fourth-type value is also linearly related to a second load parameter, a linear coefficient between the fourth-type value and the second load parameter is equal to -1, and the second load parameter is a positive integer.

As one embodiment, the second load parameter is the quantity of DMRS REs in each RB in the target RE set.

As one embodiment, the second load parameter is the quantity of DMRS REs in each RB in the first RE set.

As one embodiment, the second load parameter is the quantity of DMRS REs in each RB.

As one embodiment, the second load parameter is the quantity of DMRS REs in each RB in the target RE set comprising overhead of a DMRS CDM (Code Division Multiplexing) group without data.

As one embodiment, the second load parameter is the quantity of DMRS REs in each RB in the first RE set comprising overhead of a DMRS CDM (Code Division Multiplexing) group without data.

As one embodiment, the second load parameter is the quantity of DMRS REs in each RB comprising overhead of a DMRS CDM (Code Division Multiplexing) group without data.

As one embodiment, the second load parameter is $N_{DMRS}^{PRB}$ , and the specific definition of the $N_{DMRS}^{PRB}$ is shown in Chapter 5.1.3.2 or Chapter 6.1.4.2 of 3GPP TS38.214.

As one embodiment, the first-type value is $N_{RE}$, and the specific definition of the $N_{RE}$ is shown in Chapter 5.1.3.2 of 3GPP TS38.214.

As one embodiment, the first-type value is $N_{RE}$, and the specific definition of the $N_{RE}$ is shown in Chapter 6.1.4.2 of 3GPP TS38.214.

As one embodiment, a given RB number is $n_{PRB}$.

As one embodiment, the specific definition of the $n_{PRB}$ is shown in Chapter 5.1.3.2 of 3GPP TS38.214.

As one embodiment, a given RB number is $n_{PRB}$.

As one embodiment, the specific definition of the $n_{PRB}$ is shown in Chapter 6.1.4.2 of 3GPP TS38.214.

As one embodiment, the fourth-type value is $N'_{RE}$ .

As one embodiment, the specific definition of the $N'_{RE}$ is shown in Chapter 5.1.3.2 of 3GPP TS38.214.

As one embodiment, the fourth-type value is $N'_{RE}$ .

As one embodiment, the specific definition of the $N'_{RE}$ is shown in Chapter 6.1.4.2 of 3GPP TS38.214.

As one embodiment, the first reference threshold is equal to 156.

As one embodiment, the quantity of subcarriers included in one PRB is equal to 12.

As one embodiment, the fourth target value is $N_{info}$.

As one embodiment, the specific definition of $N_{info}$ is shown in Chapter 5.1.3.2 or Chapter 6.1.4.2 of 3GPP TS38.214.

As one embodiment, the second-type value is $N'_{info}$ .

As one embodiment, the specific definition of $N'_{info}$ is shown in Chapter 5.1.3.2 or Chapter 6.1.4.2 of 3GPP TS38.214.

As one embodiment, the fourth target value is not greater than 3824.

As one embodiment, the second reference threshold is equal to 24.

As one embodiment, the third parameter is equal to $2^{\max\left(3,\lfloor log_2(\text{Fourth target value})\rfloor-6\right)}$.

As one embodiment, the second-type value is equal to $\max\left(24, \text{third parameter} \cdot \left\lceil \frac{\text{fourth target value}}{\text{third parameter}} \right\rceil\right)$.

As one embodiment, any integer in the first-type reference integer set is a candidate TBS (Transport Block Size).

As one embodiment, the first-type reference integer set comprises all TBSs in Table 5.1.3.2-1 of 3GPP TS38.214 (V15.3.0).

## Embodiment 7

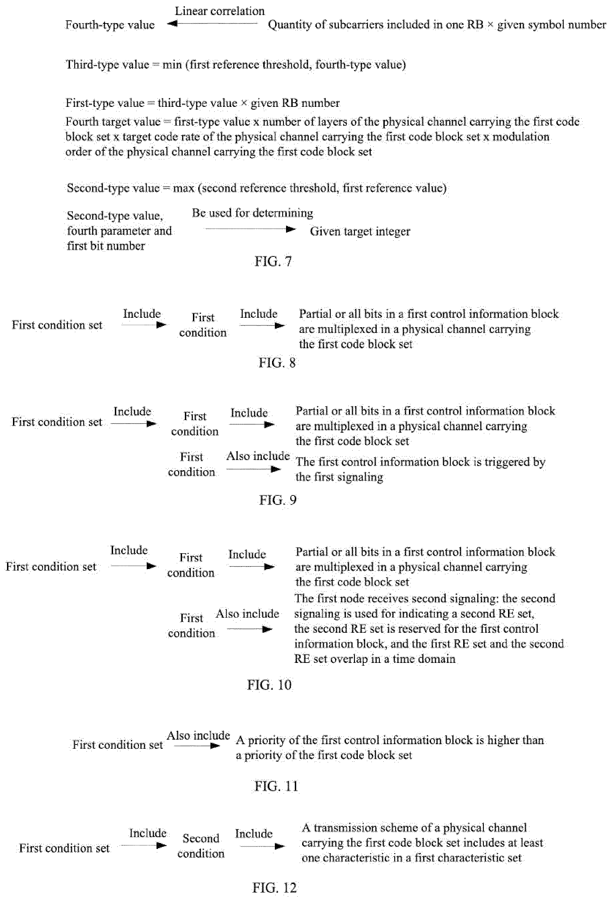

Embodiment 7 illustrates a schematic diagram of relationships between a given target integer and a given symbol number as well as a given RB number according to another embodiment of the present application, as shown in FIG. 7.

In Embodiment 7, a first-type value is a product of a third-type value and a given RB number; the third-type value is the smaller of a fourth-type value and a first reference threshold; the fourth-type value is linearly related to a given symbol number, and a linear coefficient between the fourth-type value and the given symbol number is equal to the quantity of subcarriers included in one RB; the fourth target value is a product of a first-type value, the number of layers of the physical channel carrying the first code block set, a target code rate of the physical channel carrying the first code block set, and a modulation order of the physical channel carrying the first code block set; a second-type value is the greater one of a second reference threshold and a first reference value, the fifth target value is equal to the fourth target value minus a reference bit number, and the reference bit number is a positive integer; the fifth target value is used for determining a third parameter, a second reference value is equal to the fifth target value divided by the third parameter, the first reference value is equal to the third parameter multiplied by an integer closest to the second reference value, and the third parameter is a positive integer; and the second-type value is used for determining a fourth parameter, a given target integer is equal to

fourth $\text{parameter} \times \left\lceil \frac{\text{second}-\text{type value}+\text{first bit number}}{\text{fourth parameter}} \right\rceil$ - first bit number, the fourth parameter is a positive integer, and the first bit number is a positive integer.

As one embodiment, the given symbol number is the second symbol number in the present application, the given RB number is the second RB number in the present application, and the given target integer is the second target integer in the present application.

As one embodiment, the given symbol number is the first symbol number in the present application, the given RB number is the first RB number in the present application, and the given target integer is equal to or greater than the quantity of bits included in the first code block set.

As one embodiment, the given symbol number is the first symbol number in the present application, the given RB number is the first RB number in the present application, and the given target integer is equal to the quantity of bits included in the first code block set.

As one embodiment, the given symbol number is the first symbol number in the present application, the given RB number is the first RB number in the present application, and the given target integer is greater than the quantity of bits included in the first code block set.

As one embodiment, the fourth-type value is also linearly related to a first load parameter, a linear coefficient between the fourth-type value and the first load parameter is equal to -1, and the first load parameter is a non-negative integer.

As one embodiment, the fourth-type value is also linearly related to a second load parameter, a linear coefficient between the fourth-type value and the second load parameter is equal to -1, and the second load parameter is a positive integer.

As one embodiment, the first-type value is $N_{RE}$, and the specific definition of the $N_{RE}$ is shown in Chapter 5.1.3.2 of 3GPP TS38.214.

As one embodiment, the first-type value is $N_{RE}$, and the specific definition of the $N_{RE}$ is shown in Chapter 6.1.4.2 of 3GPP TS38.214.

As one embodiment, the given RB number is $n_{PRB}$, and the specific definition of the $n_{PRB}$ is shown in Chapter 5.1.3.2 of 3GPP TS38.214.

As one embodiment, the given RB number is $n_{PRB}$, and the specific definition of the $n_{PRB}$ is shown in Chapter 6.1.4.2 of 3GPP TS38.214.

As one embodiment, the fourth-type value is $N_{RE}$, and the specific definition of the $N'_{RE}$ is shown in Chapter 5.1.3.2 of 3GPP TS38.214.

As one embodiment, the fourth-type value is $N_{RE}$, and the specific definition of the $N'_{RE}$ is shown in Chapter 6.1.4.2 of 3GPP TS38.214.

As one embodiment, the first reference threshold is equal to 156.

As one embodiment, the quantity of subcarriers included in one PRB is equal to 12.

As one embodiment, the fourth target value is $N_{info}$, and the specific definition of the $N_{info}$ is shown in Chapter 5.1.3.2 or Chapter 6.1.4.2 of 3GPP TS38.214.

As one embodiment, the second-type value is $N'_{info}$, and the specific definition of the $N'_{info}$ is shown in Chapter 5.1.3.2 or Chapter 6.1.4.2 of 3GPP TS38.214.

As one embodiment, the fourth target value is greater than 3824.

As one embodiment, the first bit number is one of {6, 11, 16, 24}.

As one embodiment, the first bit number is 24.

As one embodiment, a target code rate of the physical channel carrying the first code block set is not greater than 1/4, and the fourth parameter is $8 \cdot \left\lceil \dfrac{\text{second-type value}+\text{first bit number}}{3816} \right\rceil$.

As one embodiment, a target code rate of the physical channel carrying the first code block set is greater than 1/4, the second-type value is greater than 8424, and the fourth parameter is $8 \cdot \left\lceil \dfrac{\text{second-type value}+\text{first bit number}}{8424} \right\rceil$.

As one embodiment, a target code rate of the physical channel carrying the first code block set is greater than 1/4, the second-type value is not greater than 8424, and the fourth parameter is equal to 8.

As one embodiment, the second reference threshold is equal to 3840.

As one embodiment, the reference bit number is equal to the first bit number.

As one embodiment, the reference bit number is one of {6, 11, 16, 24}.

As one embodiment, the reference bit number is 24.

As one embodiment, the third parameter is equal to $2^{\left(\lfloor log_2(\text{fifth target value})\rfloor - 5\right)}$.

As one embodiment, the second-type value is equal to max $\left(3840, \text{third parameter} \cdot \text{round}\left(\dfrac{\text{fifth target value}}{\text{third parameter}}\right)\right)$.

## Embodiment 8

Embodiment 8 illustrates a schematic diagram of a first condition according to one embodiment of the present application, as shown in FIG. 8.

In Embodiment 8, the first condition set comprises a first condition, the first condition comprises: partial or all bits in a first control information block are multiplexed in a physical channel carrying the first code block set, and the first control information block comprises at least one bit.

As one embodiment, the first condition set comprises a first condition, the first condition comprises: a first control information block is multiplexed in a physical channel carrying the first code block set, and the first control information block comprises at least one bit.

As one embodiment, the first control information block comprises UCI (Uplink Control Information).

As one embodiment, the first control information block comprises HARQ-ACK (Hybrid Automatic Repeat reQuest-Acknowledgement).

As one embodiment, the first control information block comprises at least one of HARQ-ACK, SR (Scheduling Request) or CSI (Channel State Information).

As one embodiment, the first control information block comprises CSI (Channel State Information).

As one embodiment, the CSI comprises at least one of CRI (Channel-state information reference signal Resource Indicator), SSBRI (Synchronization Signal/physical broadcast channel Block Resource Indicator), LI (Layer Indicator), PMI (Precoding Matrix Indicator), CQI (Channel Quality Indicator), L1-RSRP (Layer 1 Reference Signal Received Power), L1-RSRQ (Layer 1-Reference Signal Received Quality), or L1-SINR (Layer 1 Signal to Interference and Noise Ratio).

As one embodiment, the first control information block is scheduled by signaling other than the first signaling.

As one embodiment, the first control information block comprises one bit.

As one embodiment, the first control information block comprises more than one bit.

**Embodiment 9**

Embodiment 9 illustrates a schematic diagram of a first condition according to another embodiment of the present application, as shown in FIG. 9.

In Embodiment 9, the first condition set comprises a first condition, the first condition comprises: partial or all bits in a first control information block are multiplexed in a physical channel carrying the first code block set, and the first control information block comprises at least one bit. The first condition also comprises: the first control information block is triggered by the first signaling.

As one embodiment, the meaning of the sentence "The first control information block is triggered by the first signaling" comprises: the first signaling triggers one HARQ codebook, and the first control information block comprises the one HARQ codebook triggered by the first signaling.

As one embodiment, the meaning of the sentence "The first control information block is triggered by the first signaling" comprises: the first signaling triggers a CSI, and the first control information block comprises the CSI triggered by the first signaling.

As one embodiment, the meaning of the sentence "The first control information block is triggered by the first signaling" comprises: the first signaling triggers an aperiodic CSI, and the first control information block comprises the aperiodic CSI triggered by the first signaling.

Typically, one HARQ codebook comprises at least one HARQ-ACK.

Typically, one HARQ codebook comprises at least one HARQ-ACK of an HARQ process number.

**Embodiment 10**

Embodiment 10 illustrates a schematic diagram of a first condition according to another embodiment of the present application, as shown in FIG. 10.

In Embodiment 10, the first condition set comprises a first condition, the first condition comprises: partial or all bits in a first control information block are multiplexed in a physical channel carrying the first code block set, and the first control information block comprises at least one bit. The first condition also comprises: the first node receives second signaling; wherein, the second signaling is used for indicating a second RE set, the second RE set is reserved for the first control information block, and the first RE set and the second RE set overlap in a time domain.

Typically, a sender of the second signaling is a sender of the first signaling, and a recipient of the second signaling is a recipient of the first signaling.

As one embodiment, the second signaling is physical layer signaling.

As one embodiment, the second signaling is DCI (Downlink Control Information) signaling.

As one embodiment, the second signaling is higher-level signaling.

As one embodiment, the second signaling is RRC signaling.

As one embodiment, the second signaling is MAC CE signaling.

As one embodiment, the higher-level signaling is RRC signaling.

As one embodiment, the higher-level signaling is MAC CE signaling.

As one embodiment, the second signaling and the first signaling belong to one identical CORESET pool.

As one embodiment, BWP (BandWidthPart) in which the first signaling is located is configured with two CORESET pools, and the second signaling and the first signaling belong to one identical CORESET pool in the two CORESET pools.

As one embodiment, the second RE set comprises at least one RE.

As one embodiment, the second RE set is composed of all REs occupied by a PUCCH (Physical Uplink Control CHannel) resource.

As one embodiment, the second RE set comprises a physical channel resource reserved for the first control information block.

As one embodiment, the second RE set comprises a PUCCH resource reserved for the first control information block.

As one embodiment, the second RE set comprises a PSFCH (Physical Sidelink Feedback CHannel) resource reserved for the first control information block.

As one embodiment, the first control information block is abandoned to be transmitted in the second RE set, and partial or all bits in the first control information block are multiplexed into the target RE set for transmission.

As one embodiment, the meaning of the sentence "The second RE set is reserved for the first control information block" comprises: the second RE set is configured or scheduled to the first control information block.

As one embodiment, the meaning of the sentence "The second RE set is reserved for the first control information block" comprises: the second RE set is indicated to the first control information block.

As one embodiment, the meaning of the sentence "The second RE set is reserved for the first control information block" comprises: at the moment of sending the second signaling, the second RE set is scheduled for transmission of the first control information block.

As one embodiment, the meaning of the sentence "The second RE set is reserved for the first control information block" comprises: the actual transmission of the first control information block occupies partial or all REs in the second RE set.

As one embodiment, the meaning of the sentence "The second RE set is reserved for the first control information block" comprises: the actual transmission of the first control information block does not occupy the second RE set.

As one embodiment, the meaning of the sentence "The second RE set is reserved for the first control information block" comprises: the first control information block is abandoned from being transmitted in the second RE set.

As one embodiment, the second signaling explicitly indicates a second RE (Resource Element) set.

As one embodiment, the second signaling implicitly indicates a second RE set.

As one embodiment, the second RE set relies on time domain resources occupied by the second signaling.

As one embodiment, the second RE set relies on time-frequency resources occupied by the second signaling.

As one embodiment, the second signaling directly indicates a second RE (Resource Element) set.

As one embodiment, the second signaling indirectly indicates a second RE set.

As one embodiment, the second signaling indicates a symbol occupied by the second RE set in a time domain and a subcarrier occupied by the second RE set in a frequency domain.

As one embodiment, the second signaling indicates a symbol occupied by the second RE set in a time domain and an RB occupied by the second RE set in a frequency domain.

As one embodiment, the second signaling comprises a third field, and the third field in the second signaling is used for indicating the second RE set; the third field comprises at least one bit.

As one sub-embodiment of the above-mentioned embodiments, the third field in the second signaling indicates an index of the second RE set in a reference RE pool, the reference RE pool comprises at least one RE set, the second RE set is one RE set in the reference RE pool, and one RE set comprises at least one RE.

As one sub-embodiment of the above-mentioned embodiments, the third field in the second signaling indicates an index of a first air interface resource set in a reference air interface resource pool, the reference air interface resource pool comprises at least one air interface resource set, the first air interface resource set is an air interface resource set in the reference air interface resource pool, the second RE set is composed of all REs occupied by the first air interface resource set in a time frequency domain, and one air interface resource set comprises at least one RE in a time frequency domain.

As one sub-embodiment of the above-mentioned embodiments, the third field in the second signaling indicates an index of a first PUCCH resource in one PUCCH resource set, the one PUCCH resource set comprises at least one PUCCH resource, the first PUCCH resource is a PUCCH resource in the one PUCCH resource set, the second RE set is composed of all REs occupied by the first PUCCH resource in a time frequency domain, and one PUCCH resource comprises at least one RE in a time frequency domain.

As one sub-embodiment of the above-mentioned embodiments, the third field is the PUCCH resource indicator field.

As one embodiment, the specific definition of the PUCCH resource indicator field is shown in Chapter 7.3.1 of 3GPP TS38.212.

As one embodiment, the first control information block comprises HARQ-ACK (Hybrid Automatic Repeat reQuest-Acknowledgement) associated with the second signaling.

As one embodiment, the HARQ-ACK associated with the second signaling comprises a NACK.

As one embodiment, the HARQ-ACK associated with the second signaling comprises an ACK or a NACK.

As one embodiment, the HARQ-ACK associated with the second signaling indicates whether each bit in a bit block set scheduled by the second signaling is correctly received.

As one sub-embodiment of the above-mentioned embodiments, the bit block set scheduled by the second signaling comprises a TB (Transport Block).

As one sub-embodiment of the above-mentioned embodiments, the bit block set scheduled by the second signaling comprises at least one TB.

As one sub-embodiment of the above-mentioned embodiments, the bit block set scheduled by the second signaling comprises at least one CB (Code Block).

As one sub-embodiment of the above-mentioned embodiments, the bit block set scheduled by the second signaling comprises at least one CBG (Code Block Group).

As one embodiment, the HARQ-ACK associated with the second signaling indicates whether the second signaling is correctly received.

As one embodiment, the second signaling is used for indicating SPS (Semi-Persistent Scheduling) release, and the HARQ-ACK associated with the second signaling indicates whether the second signaling is correctly received.

As one embodiment, the second signaling is used for scheduling a PDSCH (Physical Downlink Shared Channel), and the HARQ-ACK associated with the second signaling indicates whether the PDSCH scheduled by the second signaling is correctly received.

As one embodiment, the first receiver receives a first signal; wherein, the second signaling is used for indicating a time-frequency resource occupied by the first signal, and the first control information block comprises HARQ-ACK for the first signal.

As one sub-embodiment of the above-mentioned embodiments, the first control information block comprises HARQ-ACK associated with the second signaling, and the HARQ-ACK associated with the second signaling is HARQ-ACK for the first signal.

As one sub-embodiment of the above-mentioned embodiments, a transmission channel of the first signal is DL-SCH (Downlink Shared Channel).

As one sub-embodiment of the above-mentioned embodiments, the first signal is transmitted on the PDSCH.

As one sub-embodiment of the above-mentioned embodiments, the first signal carries a bit block set.

As one sub-embodiment of the above-mentioned embodiments, the first signal carries a TB.

As one sub-embodiment of the above-mentioned embodiments, the first signal carries at least one TB.

As one sub-embodiment of the above-mentioned embodiments, the first signal carries at least one CB.

As one sub-embodiment of the above-mentioned embodiments, the first signal carries at least one CBG (Code Block Group).

As one sub-embodiment of the above-mentioned embodiments, the first signal carries a bit block set scheduled by the second signaling.

As one sub-embodiment of the above-mentioned embodiments, the first control information block indicates whether each bit block carried by the first signal is correctly received.

As one sub-embodiment of the above-mentioned embodiments, the second signaling indicates a time domain resource occupied by the first signal and a frequency domain resource occupied by the first signal.

As one sub-embodiment of the above-mentioned embodiments, the second signaling comprises a first field and a second field, the first field in the second signaling indicates a time domain resource occupied by the first signal, and the second field in the second signaling indicates a frequency domain resource occupied by the first signal.

As one sub-embodiment of the above-mentioned embodiments, the second signaling comprises a first field and a second field, the first field in the second signaling indicates a symbol occupied by the first signal, and the second field in the second signaling indicates an RB occupied by the first signal.

As one embodiment, one bit block set comprises at least one bit block, and one bit block comprises at least one bit.

As one embodiment, the first RE set and the second RE set are orthogonal.

As one embodiment, the first RE set and the second RE set do not comprise one identical RE.

As one embodiment, the first RE set and the second RE set comprise at least one identical RE.

As one embodiment, the first RE set and the second RE set comprise at least one identical symbol in a time domain.

As one embodiment, the first RE set and the second RE set comprise at least one identical subcarrier in a frequency domain.

As one embodiment, the first RE set and the second RE set are orthogonal in a frequency domain.

As one embodiment, the first RE set and the second RE set overlap in a frequency domain.

As one embodiment, the first RE set and the second RE set do not comprise one identical subcarrier in a frequency domain.

**Embodiment 11**

Embodiment 11 illustrates a schematic diagram of a first condition according to one embodiment of the present application, as shown in FIG. 11.

In Embodiment 11, the first condition also comprises: a priority of the first control information block is higher than a priority of the first code block set.

Typically, the priority of the first code block set is a priority of a physical channel carrying the first code block set.

Typically, the priority of the first code block set is not higher than the priority of the physical channel carrying the first code block set.

As one embodiment, the first condition also comprises: the priority of the first control information block is equal to or higher than the priority of the first code block set.

As one embodiment, the meaning of the sentence "The priority of the first control information block is higher than the priority of the first code block set" comprises: an index of the priority of the first control information block is 0, and an index of the priority of the first code block set is a positive integer.

As one embodiment, the meaning of the sentence "The priority of the first control information block is higher than the priority of the first code block set" comprises: an index of the priority of the first control information block is 1, and an index of the priority of the first code block set is 0.

As one embodiment, the meaning of the sentence "The priority of the first control information block is higher than the priority of the first code block set" comprises: an index of the priority of the first control information block is greater than an index of the priority of the first code block set.

As one embodiment, the meaning of the sentence "The priority of the first control information block is higher than the priority of the first code block set" comprises: an index of the priority of the first control information block is smaller than an index of the priority of the first code block set.

Typically, the index of the priority of the first control information block is a non-negative integer, and the index of the priority of the first code block set is a non-negative integer.

As one embodiment, the second signaling indicates a priority of the first control information block, and the first signaling indicates a priority of the first code block set.

As one embodiment, the second signaling indicates a priority of the first control information block, and the first signaling indicates a priority of the first code block set.

As one embodiment, the first signaling comprises a fourth field, and the fourth field in the first signaling indicates a priority of the first code block set.

As one embodiment, the second signaling comprises a fourth field, and the fourth field in the second signaling indicates a priority of the first control information block.

As one embodiment, the first signaling comprises a fourth field, and the fourth field in the first signaling indicates an index of a priority of the first code block set.

As one embodiment, the second signaling comprises a fourth field, and the fourth field in the second signaling indicates an index of a priority of the first control information block.

As one embodiment, the fourth field is a priority indicator field.

As one embodiment, the specific definition of the priority indicator field is shown in Chapter 7 of 3GPP TS38.212.

As one embodiment, the fourth field is a priority field.

As one embodiment, the specific definition of the priority field is shown in Chapter 8 of 3GPP TS38.212.

As one embodiment, the index of the priority is a priority index.

As one embodiment, the specific definition of the priority index is shown in Chapters 5 and 6 of 3GPP TS38.214.

As one embodiment, the index of the priority is a priority value.

As one embodiment, the specific definition of the priority value is shown in Chapter 8 of 3GPP TS38.214.

## Embodiment 12

Embodiment 12 illustrates a schematic diagram of a second condition according to one embodiment of the present application, as shown in FIG. 12.

In Embodiment 12, the first condition set comprises a second condition, and the second condition comprises: a transmission scheme of a physical channel carrying the first code block set comprises at least one characteristic in a first characteristic set.

As one embodiment, the first characteristic set comprises: repeated transmission.

As one embodiment, the first characteristic set comprises: the number of repeated transmissions is greater than a third reference threshold, wherein the third reference threshold is a positive integer.

As one sub-embodiment of the above-mentioned embodiments, the third reference threshold is equal to 1.

As one sub-embodiment of the above-mentioned embodiments, the third reference threshold is greater than 1.

As one sub-embodiment of the above-mentioned embodiments, the third reference threshold is configurable.

As one sub-embodiment of the above-mentioned embodiments, the third reference threshold is configured by an RRC parameter.

As one embodiment, the first characteristic set comprises: multiple transmit receive points (TRP) transmission.

As one embodiment, the first characteristic set comprises: multiple antenna panel transmission.

As one embodiment, the first characteristic set comprises: SFN (Single Frequency Network).

As one embodiment, the first characteristic set comprises: DMRS bundling.

As one embodiment, the first characteristic set comprises: TB processing over multiple slots.

As one embodiment, the first characteristic set comprises: nominal repetition.

As one embodiment, the first characteristic set comprises: PUSCH repetition type B.

As one embodiment, the specific definition of the DMRS bundling is shown in Chapter 6 of 3GPP TS38.214.

As one embodiment, the specific definition of the TB processing over multiple slots is shown in Chapter 6 of 3GPP TS38.214.

As one embodiment, the specific definition of the nominal repetition is shown in Chapter 6 of 3GPP TS38.214.

As one embodiment, the specific definition of the PUSCH repetition type B is shown in Chapter 6 of 3GPP TS38.214.

Typically, the meaning of DMRS bundling comprises: PUSCH transmission in a time domain window (TDW) maintains power consistency and phase continuity.

## Embodiment 13

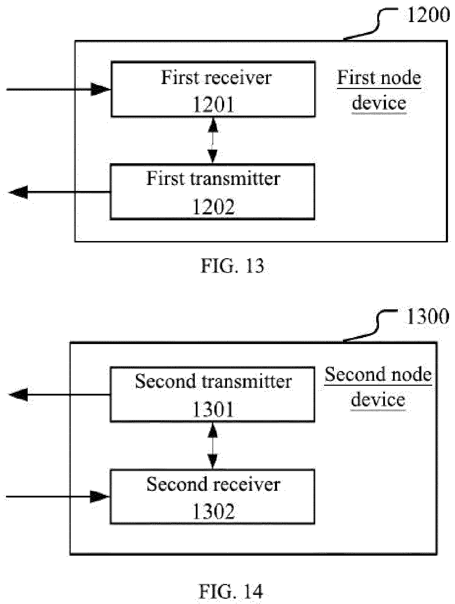

Embodiment 13 illustrates a structural block diagram of a processing apparatus used in a first node device according to one embodiment of the present application, as shown in FIG. 13. In FIG. 13, a processing apparatus 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, a data source 467} in Embodiment 4.

As one embodiment, the first transmitter 1202 comprises at least one of {an antenna 452, a transmitting device 454, a transmitting processor 468, a multi-antenna transmitting processor 457, a controller/processor 459, a memory 460, a data source 467} in Embodiment 4.

The first receiver 1201 receives first signaling, wherein the first signaling is used for indicating a first RE set;

The first transmitter 1202 transmits a first code block set in the target RE set, and the target RE set is the first RE set or a proper subset of the first RE set;

In Embodiment 13, the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the first condition set comprises a first condition, the first condition comprises: partial or all bits in a first control information block are multiplexed in a physical channel carrying the first code block set, and the first control information block comprises at least one bit.

As one embodiment, the first condition further comprises: the first control information block is triggered by the first signaling.

As one embodiment, the first condition also comprises: the first node receives second signaling; wherein, the second signaling is used for indicating a second RE set, the second RE set is reserved for the first control information block, and the first RE set and the second RE set overlap in a time domain.

Typically, the first receiver 1201 receives the second signaling.

As one embodiment, the first condition also comprises: a priority of the first control information block is higher than a priority of the first code block set.

As one embodiment, the first condition set comprises a second condition, and the second condition comprises: a transmission scheme of a physical channel carrying the first code block set comprises at least one characteristic in a first characteristic set.

As one embodiment, the first transmitter 1202 further transmits a second bit block in the target RE set; wherein, the second bit block is used for indicating at least one of a symbol occupied by the target RE set or an RB occupied by the target RE set.

## Embodiment 14

Embodiment 14 illustrates a structural block diagram of a processing apparatus used in a second node device according to one embodiment of the present application, as shown in FIG. 14. In FIG. 14, a processing apparatus 1300 in the second node device comprises a second transmitter 1301 and a second receiver 1302.

As one embodiment, the second node device is a base station device.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, a memory 476} in Embodiment 4.

As one embodiment, the second receiver 1302 comprises at least one of {an antenna 420, a receiving device 418, a receiving processor 470, a multi-antenna receiving processor 472, a controller/processor 475, a memory 476} in Embodiment 4.

The second transmitter 1301 sends first signaling, wherein the first signaling is used for indicating a first RE set;

the second receiver 1302 receives a first code block set in a target RE set, wherein the target RE set is the first RE set or a proper subset of the first RE set;

In Embodiment 14, the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set includes one or more conditions.

As one embodiment, the first condition set comprises a first condition, the first condition comprises: partial or all bits in a first control information block are multiplexed in a physical channel carrying the first code block set, and the first control information block comprises at least one bit.

As one embodiment, the first condition further comprises: the first control information block is triggered by the first signaling.

As one embodiment, the first condition also comprises: the second node sends second signaling; wherein, the second signaling is used for indicating a second RE set, the second RE set is reserved for the first control information block, and the first RE set and the second RE set overlap in a time domain.

Typically, the second transmitter 1301 transmits the second signaling.

As one embodiment, the first condition also comprises: a priority of the first control information block is higher than a priority of the first code block set.

As one embodiment, the first condition set comprises a second condition, and the second condition comprises: a transmission scheme of a physical channel carrying the first code block set comprises at least one characteristic in a first characteristic set.

As one embodiment, the second receiver 1302 also receives a second bit block in the target RE set; wherein, the second bit block is used for indicating at least one of a symbol occupied by the target RE set or an RB occupied by the target RE set.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. User equipment, terminals and UE in the present application include but are not limited to wireless communication devices such as drones, communication modules on drones, remote-controlled aircrafts, flying machines, small aircrafts, mobile phones, tablet computers, notebook computers, vehicle communication devices, wireless sensors, data cards, Internet of Things terminals, RFID terminals, NB-IOT terminals, MTC (Machine Type Communication) terminals, eMTC (enhanced MTC) terminals, data cards, data cards, vehicle communication devices, low-cost mobile phones, and low-cost tablet computers. The base station or system equipment in the present application includes but is not limited to wireless communication devices such as macro cellular base stations, micro cellular base stations, home base stations, relay base stations, gNB (NR Node B) NR Node B, TRPs (Transmit Receive Points).

The above is only a preferred embodiment of the present application and is not intended to limit the scope of protection of the present application. For any changes and modifications made based on the embodiments described in the specification, if similar partial or all technical effects can be obtained, it should be regarded as obvious and within the scope of the protection of the present invention.

## Claims

1. A first node device for wireless communication, comprising:

   a first receiver receiving first signaling, wherein the first signaling is used for indicating a first RE set; and
   a first transmitter sending a first code block set in a target RE set, wherein the target RE set is the first RE set or a proper subset of the first RE set;
   wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set comprises one or more conditions.

2. The first node device according to claim 1, wherein the first condition set comprises a first condition, and the first condition comprises: partial or all bits in the first control information block are multiplexed in a physical channel carrying the first code block set, and the first control information block comprises at least one bit.

3. The first node device according to claim 2, wherein the first condition also comprises: the first control information block is triggered by the first signaling.

4. The first node device according to claim 2, wherein the first condition further comprises: the first node receives second signaling; wherein, the second signaling is used for indicating a second RE set, the second RE set is reserved for the first control information block, and the first RE set and the second RE set overlap in a time domain.

5. The first node device according to any one of claims 2 to 4, wherein the first condition further comprises: a priority of the first control information block is higher than a priority of the first code block set.

6. The first node device according to claim 2, wherein the first condition set comprises a second condition, and the second condition comprises: a transmission scheme of a physical channel carrying the first code block set comprises at least one characteristic in a first characteristic set.

7. The first node device according to any one of claims 1 to 6, comprising:

the first transmitter further sending a second bit block in the target RE set;
wherein, the second bit block is used for indicating at least one of a symbol occupied by the target RE set or an RB occupied by the target RE set.

8. A second node device for wireless communication, comprising:

a second transmitter sending first signaling, wherein the first signaling is used for indicating a first RE set; and
a second receiver receiving a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set comprises one or more conditions.

9. A method used in a first node for wireless communication, comprising:

receiving first signaling, wherein the first signaling is used for indicating a first RE set; and
sending a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set comprises one or more conditions.

10. A method used in a second node for wireless communication, comprising:

sending first signaling, wherein the first signaling is used for indicating a first RE set; and
receiving a first code block set in a target RE set, wherein the target RE set is the first RE set or a proper subset of the first RE set;
wherein the first RE set is reserved for the first code block set, and the first code block set comprises at least one code block; and the target RE set is related to whether a first condition set is satisfied; when the first condition set is satisfied, the target RE set is the first RE set; and when the first condition set is not satisfied, the size of the target RE set depends on the number of bits included in the first code block set; the first condition set comprises one or more conditions.

100

First node

101
Receive first signaling

102
Send a first code block
set in a target RE set

FIG. 1

5GS/EPS 200

220
HSS/UDM

NG-RAN
202

211
MME/AMF/
SMF

214
Other
MME/AMF/
SMF

201
UE

203
NR Node B

241
UE

204
Other NR
Node B

212
S-GW/UPF

213
P-GW/UPF

230
Internet service

5GC/EPC
210

FIG. 2

Control plane
300

User plane
350

L3
RRC 306

SDAP 356

305
PDCP 304

PDCP 354

355 L2

L2
RLC 303

RLC 353

MAC 302

MAC 352

L1
PHY 301

L1
PHY 351

FIG. 3

410

420

452

450

416
Transmitting
processor

471
Multi-antenna
transmitting
processor

418
Transmitting
device
Receiving
device

452
Transmitting
device
Receiving
device

454

457
Multi-antenna
transmitting
processor

468
Transmitting
processor

475

Memory

Controller/
processor

459

Controller/
processor

Memory 460

476

Data source 467

420

452

Receiving
processor

Multi-antenna
receiving
processor

Transmitting
device
Receiving
device

Transmitting
device
Receiving
device

Multi-antenna
receiving
processor

Receiving
processor

470

472

418

454

458

456

FIG. 4

24

FIG. 5

Linear correlation

Fourth-type value ◄——————— Quantity of subcarriers included in one RB × given symbol number

Third-type value = min (first reference threshold, fourth-type value)

First-type value = third-type value × given RB number

Fourth target value = first-type value x number of layers of the physical channel carrying the first code block set x target code rate of the physical channel carrying the first code block set x modulation order of the physical channel carrying the first code block set

Second-type value = max (second reference threshold, first reference value)

Given target integer = integer closest to the second-type value in all integers in a first-type reference integer set that are not smaller than the second-type value.

FIG. 6

Fourth-type value $\xleftarrow{\text{Linear correlation}}$ Quantity of subcarriers included in one RB × given symbol number

Third-type value = min (first reference threshold, fourth-type value)

First-type value = third-type value × given RB number

Fourth target value = first-type value x number of layers of the physical channel carrying the first code block set x target code rate of the physical channel carrying the first code block set x modulation order of the physical channel carrying the first code block set

Second-type value = max (second reference threshold, first reference value)

Second-type value, fourth parameter and first bit number $\xrightarrow{\text{Be used for determining}}$ Given target integer

**FIG. 7**

First condition set $\xrightarrow{\text{Include}}$ First condition $\xrightarrow{\text{Include}}$ Partial or all bits in a first control information block are multiplexed in a physical channel carrying the first code block set

**FIG. 8**

First condition set $\xrightarrow{\text{Include}}$ First condition $\xrightarrow{\text{Include}}$ Partial or all bits in a first control information block are multiplexed in a physical channel carrying the first code block set

First condition $\xrightarrow{\text{Also include}}$ The first control information block is triggered by the first signaling

**FIG. 9**

First condition set $\xrightarrow{\text{Include}}$ First condition $\xrightarrow{\text{Include}}$ Partial or all bits in a first control information block are multiplexed in a physical channel carrying the first code block set

First condition $\xrightarrow{\text{Also include}}$ The first node receives second signaling: the second signaling is used for indicating a second RE set, the second RE set is reserved for the first control information block, and the first RE set and the second RE set overlap in a time domain

**FIG. 10**

First condition set $\xrightarrow{\text{Also include}}$ A priority of the first control information block is higher than a priority of the first code block set

**FIG. 11**

First condition set $\xrightarrow{\text{Include}}$ Second condition $\xrightarrow{\text{Include}}$ A transmission scheme of a physical channel carrying the first code block set includes at least one characteristic in a first characteristic set

**FIG. 12**

First receiver
1201

First transmitter
1202

First node device

1200

FIG. 13

Second transmitter
1301

Second receiver
1302

Second node device

1300

FIG. 14

## EP 4 598 179 A1

# INTERNATIONAL SEARCH REPORT

| International application No. |
|---|
| **PCT/CN2023/117909** |

| A. | CLASSIFICATION OF SUBJECT MATTER |
|---|---|
| | H04W 72/04(2023.01)i |

According to International Patent Classification (IPC) or to both national classification and IPC

| B. | FIELDS SEARCHED |
|---|---|

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; CJFD; IEEE; 3GPP; CNKI: 信令, 信号, 码块, 传输块, 资源, 粒子, 块, 集合, 条件, 子集, V2X, XR, signal, code block, transport block, resource, element, block, set, condition, subset, RB, RE, TB

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111526589 A (SHANGHAI LANGBO COMMUNICATION TECHNOLOGY CO., LTD.) 11 August 2020 (2020-08-11) description, paragraphs [0002]-[0631] | 1-10 |
| X | CN 114826533 A (SHANGHAI LANGBO COMMUNICATION TECHNOLOGY CO., LTD.) 29 July 2022 (2022-07-29) description, paragraphs [0002]-[0637] | 1-10 |
| A | CN 112350806 A (SHANGHAI LANGHUA COMMUNICATION TECHNOLOGY CO., LTD.) 09 February 2021 (2021-02-09) entire document | 1-10 |
| A | WO 2021023039 A1 (SHANGHAI LANGHUA COMMUNICATION TECHNOLOGY CO., LTD.) 11 February 2021 (2021-02-11) entire document | 1-10 |
| A | WO 2022166702 A1 (SHANGHAI TUILUO COMMUNICATION TECHNOLOGY PARTNERSHIP (LIMITED PARTNERSHIP)) 11 August 2022 (2022-08-11) entire document | 1-10 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2023** | **03 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/117909** |

### C.    DOCUMENTS CONSIDERED TO BE RELEVANT

| Category* | Citation of document, with indication, where appropriate, of the relevant passages | Relevant to claim No. |
|---|---|---|
| A | WO 2021008587 A1 (SHARP KK; LUO CHAO;) 21 January 2021 (2021-01-21)<br>entire document | 1-10 |

Form PCT/ISA/210 (second sheet) (July 2022)

International application No.

**PCT/CN2023/117909**

| Patent document cited in search report | | | Publication date (day/month/year) | Patent family member(s) | | | Publication date (day/month/year) |
|---|---|---|---|---|---|---|---|
| CN | 111526589 | A | 11 August 2020 | WO | 2020156246 | A1 | 06 August 2020 |
| CN | 114826533 | A | 29 July 2022 | None | | | |
| CN | 112350806 | A | 09 February 2021 | None | | | |
| WO | 2021023039 | A1 | 11 February 2021 | None | | | |
| WO | 2022166702 | A1 | 11 August 2022 | US | 2023397181 | A1 | 07 December 2023 |
| WO | 2021008587 | A1 | 21 January 2021 | US | 2022247539 | A1 | 04 August 2022 |

Form PCT/ISA/210 (patent family annex) (July 2022)